# EUROPEAN PATENT SPECIFICATION

(11) **EP 2 456 320 B1**
(45) Date of publication and mention of the grant of the patent: **17.11.2021**
(21) Application number: 10802686.5
(22) Date of filing: 16.07.2010
(51) Int. Cl.: A23G 1/00, A23G 3/20

(54) **CHOCOLATE AND NUT BUTTER SLURRY TOPICAL COATING FOR SNACK PRODUCTS**
TOPISCHE SCHOKOLADEN- UND NUSSBUTTERAUFSCHLÄMMUNGSBESCHICHTUNG FÜR SNACKPRODUKTE
ENROBAGE EN BOUILLIE DE CHOCOLAT ET DE BEURRE D'ARACHIDE TOPIQUE POUR PRODUITS DE COLLATION

(30) Priority: 21.07.2009 US 227098 P
(43) Date of publication of application: 30.05.2012
(73) Proprietor: GENERAL MILLS, INC., Minneapolis, MN 55440 (US)
(72) Inventor: NACK, Thomas J., Hopkins Minnesota 55343 (US); POLLEN, Noel R., Hopkins Minnesota 55343 (US); GEOFFRION, James W., Anoka Minnesota 55303 (US)
(74) Representative: Vossius & Partner Patentanwälte Rechtsanwälte mbB
(86) International application number: PCT/US2010/042224
(87) International publication number: WO 2011/011271

(56) References cited:
- US-A1- 2003 198 712
- US-A1- 2004 121 048
- US-A1- 2006 147 585
- US-A1- 2008 057 169
- US-A1- 2008 305 215
- US-A1- 2008 317 907
- US-A1- 2009 130 265
- US-A1- 2009 130 265
- Diana Rattray: "Ritz Cracker Treats With Chocolate Peanut Butter Coating", , 16 December 2008 (2008-12-16), pages 1-2, XP002713728, Retrieved from the Internet: URL:http://web.archive.org/web/20081216131 120/http://southernfood.about.com/od/hallo ween/r/bl60926b.htm [retrieved on 2013-09-25]
- Anonymous: "Chocolate Peanut Butter Puppy Chow", , 6 July 2008 (2008-07-06), pages 1-3, XP002713729, Retrieved from the Internet: URL:http://www.cpbgallery.com/2008/07/06/c hocolate-peanut-butter-puppy-chow/ [retrieved on 2013-09-25]
- Anonymous: "How to Make Monkey Munch", , 30 May 2009 (2009-05-30), page 1, XP002713730, Retrieved from the Internet: URL:http://web.archive.org/web/20090530025 735/http://www.wikihow.com/Make-Monkey-Mun ch [retrieved on 2013-09-25]
- Alan Rawle: "BASIC PRINCIPLES OF PARTICLE SIZE ANALYSIS", Malvern Technical Paper, no. MRK034, 1 January 1993 (1993-01-01), pages 1-8, XP055009141, UK

## Description

The present invention relates to food products and to their methods of preparation. More particularly, the present invention relates to chocolate and peanut butter coatings for food products, especially snack food products, and to their methods of preparation.

A wide variety of food products comprise a base food or comestible having a topical coating to improve the taste, appearance, nutrition, texture, stability or other feature of the product. Especially desirable, are coatings that are chocolate or chocolate flavored. However, the melting point of the cocoa butter constituent of chocolate is relatively low. A consequence of this low melting point temperature is that chocolate and chocolate coatings tend to soften or melt at relatively low temperatures leading to dimensional stability problems and clumping when the chocolate coating resets especially during transportation and storage during hot summer months or to tropical locations where high ambient temperatures are common. Still another problem is that careful temperature control in plant environments is required to assure that such food products are free flowing and can be transferred from one unit operation to another, e.g., from fabrication to packaging.

One solution to such problems with chocolate is to apply a topical coating such as a thin sugar coating that is less temperature sensitive to overlay the chocolate to provide dimensional stability. The consumer is familiar with small chocolate candies that comprise just such a thin sugar shell coating often brightly colored. Typically, such a sugar coating is applied using a well known panning operations. However, panning operations, while effective, are relatively expensive operations having lengthy application durations and low capacities (for given capital investments). Also, the sugar shell is organoleptically prominent and such prominence is not always desired.

Still another solution is to employ higher melting point chocolate flavored compound fat coatings in substitution for chocolate that is more temperature tolerant so that a thin sugar shell is unnecessary. Typically, such compositions substitute a higher melting point fat for the cocoa butter. Such higher melting point fat can be compounded by using an hydrogenated fat and/or blending with a naturally high melting point fat such as a palm fat or palm fraction such as a palm stearin. While useful, such compositions can exhibit a waxy mouthfeel as well as appearance.

Also popular are food products having a peanut flavor. However, it can be difficult to provide a peanut flavor to a puffed farinaceous snack food without using actual nut pieces. Such nut pieces can require high levels of binder to adhere in sufficient amounts. Even with high binder levels, larger peanut pieces still tend to fall off the snack pieces. It is difficult to produce peanut butter coatings that provide sufficient peanut flavor yet are not sticky. Stickiness can lead to bridging or blocking between individual coated snack pieces. Stickiness can also result in rub off of the coating onto fingers during consumption.

Surprisingly, it has been found herein that chocolate or chocolate compound can be used as both a diluent and stabilizer to natural peanut butter to provide a chocolate peanut butter coating for snack food products when the coating is used with a dry setting sugar in sufficient quantities.

US 2004/0121048 relates to a food product system for manufacturing, storing and mixing a chocolate and peanut butter coated biscuit.

In its method aspect, the present invention resides in methods for preparing a natural nut butter and chocolate compound coated food product resistant to rub-off and melting at temperatures up to 44°C.

The methods include a method according to any of claims 1 to 6.

Broadly, the present invention provides improved simplified methods for preparing a peanut butter and chocolate coating to a puffed snack base. The methods according to claim 1 include a first step of preparing or providing a hot low moisture nut butter and chocolate coating fluid slurry; applying the coating slurry to a food base to form a slurry coated food base; and, setting the slurry coated food base with a dusting sugar in amounts sufficient to provide a dried finished coated food product. Each of these method-of-preparation steps as well as end-product properties, and use are described in detail below.

Throughout the specification and claims, percentages are by weight and temperatures in degrees Centigrade unless otherwise indicated. Each of the referenced patents is incorporated herein by reference.

Broadly, the present methods include a first step of preparing or providing a hot low moisture creamy natural nut butter and chocolate coating fluid slurry for application to a snack base.

In preferred form, the coating slurry further comprises at least one creamy nut butter ingredient prepared from common nuts preferably selected from almonds, brazil nuts, cashews, hazel nuts, pecans, peanuts, walnuts and mixtures thereof. More preferred nut butter ingredients can include peanut butter, almond nut butter, pecan nut butter, and mixtures thereof. In the preferred embodiment, the nut butter is peanut butter. While in the following description, particular attention is given to peanut butter, the skilled artisan will recognize that such other nut butters can be used in full or partial substitution for the preferred peanut butter ingredient herein.

In the production of peanut butter, peanuts are typically first shelled and then hot air roasted at~240°C turning them from white to a light brown color. After roasting, the peanuts are cooled at room temperature to ensure that the natural oils will remain in the peanut. The roasted and cooled peanuts are blanched. The blancher removes the outer skins by lightly rubbing the peanuts between two belts. The two kernels of each nut are then split and the heart in the middle is removed to form split peanut halves. The bitter heart of the nut is not typically used in peanut butter. The roasted and split peanuts halves are dropped into a grinder where they are ground into a smooth or creamy paste. Additional ingredients can be added to the ground peanuts in order to create consumer food products peanut butter including include salt, sugar, peanut pieces (for chunky style peanut butter products) and often, for shelf stable peanut butter, hydrogenated vegetable oil. The hydrogenated vegetable oil is considered a stabilizer as it keeps the natural peanut oil from separating from the peanut butter and rising to the top of the jar. However, in the present invention, the coating slurry includes a natural peanut butter, i.e., a peanut butter ingredient substantially free of hydrogenated vegetable oil so as to provide finished products low in trans fatty acids (should state that a hydrogenated peanut butter will also work in this application). Moreover, a smooth or creamy peanut butter is desirable since the slurry is to be applied through application spray nozzles and chunk bits of peanuts can clog the application spray nozzles.

In the preferred form, the coating slurry comprises at least one stabilizing fat or diluent for the nut butter. The stabilizing fat should have a melting point higher than room temperature so as to be solid at room temperature. However, the stabilizing fat should not have such a high melting point such as to impart an undesirable waxy feeling to the present nut butter based coating. In one preferred variation, the stabilizing fat is provided by a chocolate compound fat. The confectionery coating is made from sugar, fractionated palm kernel oil, non-fat dry milk, cocoa, cocoa powder (processed with alkali), soya lecithin (an emulsifier), and vanilla extract.

Surprisingly, it has been found that chocolate, by virtue of its cocoa butter constituent, can serve not only as a diluent to the peanut butter but also can function as a stabilizer to minimize the oiling out of the oil constituent of a natural (i.e., not including an hydrogenated fat constituent) nut butter.

For example, the chocolate ingredient can be a pure unsweetened chocolate. Pure, unsweetened chocolate contains primarily cocoa solids and cocoa butter in varying proportions. The chocolate ingredient can also be a dark sweet chocolate that is obtained by combining chocolate with sugar. The U.S. Government calls this "sweet chocolate", and requires a 15% concentration of chocolate liquor. European rules specify a minimum of 35% cocoa solids. The chocolate ingredient can also include a milk chocolate that is a sweet chocolate that additionally contains milk powder or condensed milk. In less preferred variations, the chocolate can be a "white chocolate" that contains cocoa butter, sugar, and milk but no cocoa solids. Because of this, many countries do not consider white chocolate as chocolate at all. Of course, mixtures of various chocolate ingredients are also contemplated herein.

The most common form of cocoa butter has a melting point of around 34 - 38°C, rendering chocolate a solid at room temperature that readily melts once inside the mouth. This should be at or just above 36°C to ensure that the product melts in the mouth. If the melting point is too high it will result in a waxy mouthfeel and not melt entirely. If the melting point is too low the product may not be stable during storage in the summer or in hot climates. Fats melt over a temperature range and so at any temperature below the melting point the fat is partly in solid form and partly liquid. The addition of milk fat to make milk chocolate can soften the product and make it less heat resistant. Milk fat has a different crystalline form compared to cocoa butter, and the resulting incompatibility can lead to a destabilization of the product. The fat element of the cocoa butter can be replaced wholly or in part with vegetable fats in order to improve heat resistance. The replacement of part of the cocoa butter content of chocolate with cocoa butter equivalents (CBEs) improves the heat stability of the chocolate. In geographies with a warmer climate the addition of CBEs can significantly improve the shelf life of a chocolate product. CBEs are vegetable fats derived from palm and shea oils, which are chemically and physically very close to cocoa butter. CBEs can be made with heat resistant properties superior to cocoa butter.

The replacement of most of the cocoa butter with cocoa butter replacers (CBRs) can improve heat resistance. CBRs are derived from oils such as palm, or coconut oil. They have a very dissimilar composition to cocoa butter. The melting point of CBRs tends to be higher than that of cocoa butter thus providing greater heat resistance. Products containing CBRs cannot always be called chocolate. Such products are sometimes referred to as chocolate flavored compound fats.

The coating slurry comprises -30% to 70% of the slurry of the chocolate
and ∼30% to 70% of the slurry of a creamy nut butter. More preferably, the coating slurry can include chocolate and peanut butter blends ranging in a weight ratio of from ~1:3 to ∼3:1, preferably ~1:2 to ~2:1 and for best results ∼60:40 chocolate to peanut butter. The combination of the chocolate and peanut butter ingredients together typically comprise ~90-100% of the coating slurry, preferably ∼95-98%.

It will be appreciated that inasmuch as chocolate and peanut butter are the two principle ingredients of the coating slurry, the slurry is characterized by a low moisture content of only the native moisture associated with the principal ingredients, i.e., no added moisture to the coating slurry The moisture contents of the coating slurry range from ~1-5%, typically 1-3%.

The coating slurry can optionally include other minor ingredients to improve the color, flavor, texture or nutritional of the present coated snack products. If desired, the coating can additionally comprise a wide variety of adjuvant materials intended to improve the appearance, flavor and/or nutritional properties of the finished coated food products.

Such adjuvant ingredients can include, for example, salt, minerals, vitamins, nutriceuticals or medicinals, colorants, preservatives, flavors and mixtures thereof. If present, each of these constituents can comprise from ∼0.01 to ~2% by weight of the coating slurry. The precise ingredient concentration in the present finished product composition will vary in known manner. Macronutrients and micronutrients can be provided during the manufacturing process to add essential vitamins and minerals to the product to create a well balanced, nutritionally complete meal. If desired, a preservative such as TBHQ can be added to prevent lipid oxidation in the coating. TBHQ, tertiary butylhydroquinone, is a highly effective preservative for unsaturated vegetable oils and many edible animal fats for enhancing storage life. TBHQ does not cause discoloration, and does not change flavor or odor of the material it is added to. TBHQ can be combined with other preservatives such as butylated hydroxyanisole (BHA) or butylated hydroxytoluene (BHT).

The coating slurry can include a secondary or supplemental palm or coconut oil stabilizing agent that can further mitigate or prevents separation of oils from the peanut butter during storage. The natural (i.e., non hydrogenated) oil stabilizing ingredient can be admixed with the peanut butter or added separately to the coating slurry. If present such stabilizing oil can comprise ∼1-5% of the coating slurry. The stabilizing agent can also minimize undesirable melting or smearing of the chocolate portion of the coating that can result at higher temperatures. In one embodiment these oils are not added to the slurry separately or independently, but the chocolate compound coating has about 30% palm kernel oil.

Also, the slurry can be thinned, for easier or cleaner application by spraying using a spray nozzle by the addition of small amounts of a liquid vegetable oil, e.g. canola oil. However, using a thinning vegetable oil can result in a more oily or greasy finished product and/or require higher levels of setting sugar to set the coating. In preferred embodiments, the coating slurry is substantially free of any such added thinning oil ingredients. If employed however, such thinning oil addition should comprise 10% or less of the coating slurry, preferably less than 7%.

The coating composition is provided in the form of a hot slurry. By hot is meant that the coating ingredients are heated to melt and form a liquid or fluid. Such liquid temperatures are typically above the melting point of the highest melting point fat ingredient of the slurry mixture. Good results are obtained when the coating slurry is heated to temperatures ranging from ~32-44°C, preferably ~34-42°C and for best results ~38-40°C.

The present methods comprise a step of applying the hot coating slurry to a quantity of food base pieces to provide a liquid hot slurry coated food base. In the preferred embodiment, the chocolate compound and peanut butter are melted down to together form the coating slurry and then sprayed onto the snack base in an enrober.

The base food pieces can be any of the typical snack food base pieces or any other product of a similar nature. The base food piece can be in the form of a chip, a tube, a ball, a curl or any of the other familiar snack forms. While generally the base food piece is cereal or farinaceous in nature such as corn, wheat, rice, barley and the like, the present invention is not limited thereto but includes any similar base food piece derived from protein, starch, fiber or combinations thereof, with or without fat and other ingredients. Many of these base pieces are made by forming a dough, either cooked or uncooked, and shaping the dough and finally toasting, baking, or deep fat frying the piece to provide the finished product. In preferred variations, the base piece is a puffed or expanded piece fabricated from a cooked cereal dough by deep fat frying. However, the base pieces can also be supplied by a wide variety of breakfast cereal pieces such as those in the form of flake, shreds, and biscuits and puffed pieces of various shapes and sizes, e.g., spheres, rings, letters, and/or figurines. The base pieces are preferably plain or uncoated.

The base piece can be rather bland in flavor or can be highly flavored by one or more flavoring materials being included into the cooked cereal dough from which the snack pieces can be fabricated.

In still other preferred variations, the uncoated snack base can be provided by cooked cereal dough pieces typically shaped and sized for snacks especially corn (maize) based pieces such as the cornucopia shaped pieces described in US Design 202,609 "Puffed Snack Food Product" (issued October 26, 1965 to Weis et al.); (or the shapes described in USD 339,443; USD 339,444; USD 341,469; USD 368,791; USD 372,352; USD 373,671; USD 384,785; or USD 403,485) or that puffed triangular pillow design described in U.K. Design 2012722 "Snack Food Product" registered August 2, 1991 to General Mills, Inc. It will be appreciated that some portion of these cornucopia shaped products snack base pieces are more flat than conical. Such products are familiar having been sold in the U.S and elsewhere for decades under the Bugles® trademark. In some variations, the cornucopia shaped base pieces are baked rather than deep fat fried to provide lower fat snack products. In still other variations, the base pieces can be flat or planar and having a variety of peripheral shapes, e.g., triangles, disks, scoops, curled strips or ribbons.

In preferred variations, the food base pieces are low moisture (e.g. 1-4% moisture) pieces having cooked and puffed or expanded by deep fat frying and have fat contents ranging from ~20-35% of the snack base. In certain variations, all or a portions pieces can be fabricated from cooked cereal dough comprising whole grains especially whole grain corn (maize). In preferred variations, the base pieces themselves are low in sugar content preferably under 15% by weight of the base of sugar(s), more preferably less than 10% total sugars in the base and for best results less than 2% sugars.

Mixtures of various base pieces are contemplated. For example, a mixture of two or more base flavors and/or shapes or sizes. Also, the food base can include other pieces such as nuts or nut pieces. In still other variations, the base can include small pretzel shapes or baked bread slices, or other non-sugar coated RTE cereal pieces such as hex lattice RTE cereal pieces (marketed under the Chex brand).

The size of the uncoated base can range from ∼75 to 125 pieces per 10 grams (uncoated) to larger sized snack food pieces ranging from ~1-20 pieces per 10g.

In preferred variations, the hot coating slurry is applied directly to the surface of the snack food base without an intervening or underlying base coat, such as an underlying sugar base coating. By applying the slurry directly to the base coat surface, better adherence of the coating and better appearance of the finished product can be obtained.

The entry temperature of the snack base pieces into the coating step can range broadly. Typically, the base food pieces, especially in the preferred embodiment of a puffed or expanded snack food fabricated by deep fat frying a cooked cereal dough expandable pellet, are fed fresh from the fryer. Ambient cooling should occur during the time interval from exiting the fryer to entering the enrober. This allows the slurry to cool quicker which better facilitates the upcoming sugar setting step. Good results are obtained when the base food pieces feed temperatures range from ~20-50°C.

In certain variations, the coating slurry is made-up fresh and applied at preferred make- up temperatures, e.g., ~32-44°C. However, in other variations, the coating slurry can be made up previously and allowed to cool to room temperature. However, the coating slurry can then be heated prior to applying it to the snack to reduce its viscosity. The coating slurry composition is heated to a temperature between 32-44°C, preferably ~34-42°C and for best results ~38-40°C to reduce viscosity to a level which facilitates mixing, pumping and application. Good results are obtained when the slurry has a viscosity at application temperatures range from about 5―20 Pas (5000―20000 Cp). The coating slurry can be applied to the snack food by conventional means such as spraying or drizzling the coating slurry onto the snack food. The coating slurry can be applied to all or a portion of the surface of the food base pieces and excellent coverage is achieved through the use of a standard enrober. As the enrober turns and the base pieces are tumbled until the applied hot coating evenly coats the exterior of the base pieces. The slurry must not be heated above 44°C because the denaturation and coagulation of proteins may cause the spray nozzles to clog and the line to shut down.

The total amount of coating slurry to be employed depends upon the composition and texture of the toppings and the base portion. Those skilled in the art will optimize the amount of coating slurry employed so that the minimum amount needed to obtain the desired appearance and textural properties. The coating slurry is present in a weight ratio of coating to food base ranging from ~1:10 to ∼1:1

Better results in terms of appearance, eating quality and consumer preference can be obtained when the ratio of coating slurry coating is more evenly balanced such as in a ratio of 2:3.

With certain snack foods, it can be desirable to tumble or agitate the snack food base pieces during coating slurry application or coating to provide an even coating. Any conventional enrobing apparatus and technique can be used to practice the present enrobing or application step. Generally, a useful technique involves tumbling. The snack base piece(s) and coating slurry are added to a rotating drum or enrober and tumbled to achieve an even coating distribution on the snack base. Preferably, the coating slurry is added after the snack base has been added to the drum. Another useful technique is simply spraying the slurry over those snack bases, which are desirably not tumbled due to the shape, frangibility, etc.

The present methods comprise a step of applying a setting sugar to a quantity of liquid hot slurry coated food base pieces to provide a stabilized slurry coated food base product as defined in present claim 1.

Preferred for use herein as the setting sugar is dextrose. Dextrose is preferred for the reason that dextrose has the desired particle size/granulation, the sweetness level, taste, cost, and its ability to blend with the slurry allowing the slurry color to come through. However, other sugar ingredients can be used in full or partial substitution for the dextrose. The setting sugar can be any dry powdered nutritive carbohydrate sweetening ingredient including simple sugars such as fructose and dextrose as well as compound sugars such as sucrose. Also useful herein are powdered forms of soluble fiber ingredients such as inulin (dextrose is not a source of Fiber). Other sugars that work well are Bakers special sugar (5% through a USS #150), powdered sugar (5% through a USS 200), fructose and various blends of these sugars. Shugar White (a powdered sugar ingredient available from the Pillsbury division of General Mills, Inc.) is particularly useful to make a non chocolate colored coating to provide a whitish product colloquially referred to sometimes as "Muddy Buddies" or Puppy Chow.

The setting sugar is in the form of a dry granules or powder having a particle size of less than about 1200 microns. While more finely ground or smaller sized dextrose particles or flour are available (i.e., powdered dextrose) no particular advantage is obtained by employing such fine materials. When dextrose with larger particle sizes is used (it is assumed that the particle agglomerated due to moisture abuse) the finished product had an undesirable appearance due to large white particulates. Very fine powdered sugar is difficult to work with because of the added dust in the air and lower perceived stability. It does however blend into the coating very well yielding a uniform finished product color.

If desired, the dextrose can be blended with one or more common seasoning materials in dry or particulate form including, for example, such seasoning materials including cocoa powder, salt, spices (e.g., black or red pepper), dried vegetables (garlic, onion, chives, etc.) dried cheese powders and mixtures thereof. If present, such adjuvant flavor materials can comprise up to -25% of the setting sugar.

The setting sugar is applied to provide the finished product with a dry stabilized non-sticky smooth continuous coating and comprises 10 to 35 weight% of the dry finished coated food base. Good results are obtained when the setting sugar blend can comprise -10-35%, preferably ∼15-30% and for best results ∼20% of the finished product. In one example, the weight ratio of coating slurry to base to setting sugar is ~30:50:20. That is, in a 100 kg quantity of finished product, ~30 kg of chocolate and peanut butter coating slurry is applied to ∼50 kg of snack base to form ~80kg of coated base. The coating slurry is then set employing ∼20 kg of setting sugar for a total weight of ∼100kg.

Conveniently, the addition of the setting sugar or practicing of the setting step is practiced by adding the setting sugar to the same enrober or tumbling mixture employed to practice the enrobing or coating step. The addition of the setting sugar is typically made downstream of the slurry addition to allow even coating of the slurry onto the base before application of the setting sugar. In disclosed variations, the setting step and the addition of the setting sugar or seasoning blend can be practiced in a separate vessel or enrober. However practiced, the setting sugar addition is practiced as a separate step rather than a simultaneous application of the coating slurry. Failure to practice the two steps separately (even if practiced in the same vessel) can undesirably result in a finished product having a sticky texture and an undesirable appearance.

In one variation, the setting sugar and the seasoning blend are combined as a dry preblend and applied as a blended or seasoned setting sugar (e.g., three parts dextrose to one part cocoa powder). In another variation, the setting sugar step is practiced in the form of two distinct sub-steps. In the first sub-step, a pure sugar, e.g., dextrose, is first applied to form a sugar base coat on the slurry enrobed piece. Thereafter, a second particulate, e.g., a seasoning blend (e.g., a chocolate or cocoa powder blend) is topically applied as a topcoat. Employing a cocoa powder as a separate top coat rather than admixing with the basecoat, for example, can provide a finished product that has improved color and appearance as compared to when the cocoa is admixed with the setting sugar basecoat. Also, the immediate flavor impact of chocolate upon consumption is enhanced.

After the sugar setting step, the coated pieces are allowed to cool to ambient temperature for subsequently packaging.

In preferred form, the finished coated snack base products of the present invention are in the form of a free flowing or separable or only loosely aggregated mixture of individually coated pieces typically of coated snack-pieces. In preferred form, the entire piece is coated with the present coating. In certain variations, however, such as biscuits, breakfast cereals, or crackers, only one surface such as one of two major oppose planar surfaces can be provided with the coating although preferably the entire surface is coated.

Desirably, the coated dried snack base pieces are at moisture contents ranging from ~1% to 4% to provide shelf stable storage.

The finished product is an improved snack food item including a smooth homogeneous, non-sticky coating slurry topical film that advantageously reduces separation of powdery and particulate toppings, such as seasonings, decorations and the like. When applied as a coating over fatty or oily items such as fried snack food base pieces, transfer of fat or oil from the base piece to the hands of the consumer can be reduced. The present coatings are reminiscent of high fat compound fat coating resistant to rub-off of a powdery or fat based topping as well as method for preparing such coated snack products. Unlike other products (e.g. hard fat coatings), the coating slurry dissolves rapidly and dissipates rapidly in the mouth for fast release of flavors from the toppings, but yet does not melt off the product during shipments where temperature is <38°C.

The finished product is characterized by an evenly thin (i.e., ~10 to 100 microns in thickness coating. The coatings are reasonably uniform in thickness (e.g., ∓50% average thickness) and mostly homogenous rather than heterogeneous and continuous rather than spotted or discontinuous.

The finished products herein can be used as a coated finished snack product themselves or be admixed with other food component to provide snack product blends. For example, the present finished products can be blended with other snack pieces such as pretzels, popcorn, biscuits, etc and/or blended with other snack product inclusions such as peanuts, candies, dried fruits, etc.

The present methods can comprise a packaging step. For example, the packaging step can be practiced by disposing a quantity of the coated finished products or blends comprising the coated products as components, especially principle components, thereof within a bag or pouch fabricated from a flexible packaging film and sealing the pouch to form a finished package snack food article. The bags can be of individual serving sizes or portions (e.g., 20-100g) or can be of larger quantities for multiples servings in a single bag or other container. For additional protection against breakage during distribution and sale, the bag can itself be disposed within a more robust exterior protective container such as a carton or box. The product also holds up when stored in 181,4 kg (400 lb) totes before individual packaging.

The inventive compositions and methods are not limited to so-called snack food items but do find particular utility therewith as these items (a) often include toppings that are prone to separation or rub-off, especially fat-based toppings such as cheese powders; and (b) are generally eaten out of the hands. Examples of savory snack food items which can be improved via the present invention include crackers, corn chips, potato chips, tortilla chips, corn puffs, especially the cornucopia shaped pieces fabricated from puffed corn based cooked cereal doughs, and the like, as well as reduced calorie and/or reduced fat snack food equivalents of the same.

Still another advantage of the present invention is substantial cost reductions to provide a coated snack base having a comparable desired flavor profile relative to the cost of providing equivalently flavored coated snack products using a high level of a high melting temperature conventional flavored compound fat ("high melt coating"). Cost savings of greater than 30% are expected based on coating cost (as compared to compound coating).

Moreover, employing the present coating provides improved texture/melt characteristics and, more specifically, alleviates the waxy mouth feel that was observed when using high melt coatings.

Still another advantage of the present invention is in providing color and flavor flexibility depending on the desired product.

The present coated snack products exhibit improved resistance to melting and blocking in the food package during distribution and sale and in particular exhibit such improved shipping abuse tolerance during high temperatures experienced during transit especially in southern locations and/or during summer months. Moreover, the present coatings can provide improvements in prevent oiling out, fat bloom, and other physical challenges that occur at abusive temperatures that can occur when compound fat based coatings are employed.

Another benefit resides in the improved visual appearance of the coated snack products prepared herein. Rather than a lumpy or heterogeneous, discontinuous coating that appears scuffed when compound fat coatings are employed alone by means of tumbling, the present coatings present an even continuous consistent thin film coating that is visually attractive. Not only is the appearance distinctive and visually attractive, the present coating compositions also provide novel texture and melt characteristics. The finished products exhibit the desired milk chocolate hue.

The present invention refers to (1) a method for preparing a coated food product, resistant to rub-off of a powdery or fat based topping, comprising the steps of: A. providing a hot low moisture chocolate and creamy natural nut butter coating slurry, said slurry comprising: 30% to 70% of the slurry of a chocolate; 30% to 70% of the slurry of a creamy nut butter; said coating in the form of a liquid having a temperature of 32-44°C and a moisture content of 1-5%; B. applying the hot coating slurry to a food base to provide a hot liquid coating coated food base in a weight ratio of coating to food base ranging from 1:10 to 1:1; wherein step B includes the sub-steps of: B1 transferring the food base pieces to a rotating drum or enrober, B2 tumbling said pieces within said drum, and, B3 spraying the hot emulsion slurry composition from a plurality of nozzles; and C. applying a dry particulate setting sugar having a particle size of 1200 microns or less to a quantity of liquid hot slurry coated food base pieces to provide a finished dry stabilized non-sticky powdered coated food base, wherein said setting sugar comprises 10 to 35 weight% of the dry finished coated food base wherein the setting step is performed within the same rotating drum or enrober. The present invention further refers to (2) the method of (1) above wherein step C is practiced comprising a first sub-step of: C1 applying said dry particulate setting sugar to a quantity of liquid hot slurry coated food base pieces to form a coated food base having a setting sugar basecoat; and thereafter, C2 applying a seasoning blend in dry powder form over the setting sugar basecoat to form a seasoning blend topcoat to provide a finished dry stabilized non-sticky powdered coated food base. The present invention further refers to (3) the method of (1) above wherein the coating slurry additionally comprises about 1% to about 30% palm kernel oil or palm oil. The present invention further refers to (4) the method of (1) above wherein the coating slurry additionally comprises about 1% to about 10% of a non-hydrogenated vegetable oil. The present invention further refers to (5) the method of (4) above wherein the ratio of chocolate to nut butter ranges from about 1:3 to about 3:1. The present invention further refers to (6) the method of (5) above wherein at least a portion of the chocolate is compound fat. The present invention further refers to (7) the method of (6) above wherein at least a majority portion of the setting sugar is dextrose and wherein the majority portion of the nut butter is peanut butter. The present invention further refers to (8) the method of (7) above wherein the coating slurry is about 30-35% of the finished product and wherein the setting sugar and seasoning is about 18-22% of the finished product. The present invention further refers to (9) the method of (8) above wherein in the slurry coating the ratio of chocolate to nut butter ranges from about 1:2 to about 2:1. The present invention further refers to (10) the method of (9) above wherein the step C is practiced by separately dispensing a setting sugar particulate composition upon surface of the pieces as they are tumbled so that said emulsion slurry composition causes said particulate composition to adhere to the surface without substantial penetration of the emulsion slurry composition into said pieces and without loss of binding or adhesion of said particulate composition to said pieces. Moreover, the present invention refers to (11) a chocolate and nut butter snack food item, comprising: a food base having an exterior surface; a nut butter and chocolate slurry coating disposed upon at least a portion of the exterior surface of the food base in the form of a thin continuous uniform film of coating, comprising: 30% to 70% of the slurry coating of chocolate; 30% to 70% of the slurry coating of a creamy natural nut butter not including a hydrogenated fat constituent said slurry coating having a moisture content of 1-5%; and, a topically applied setting sugar having a particle size of 1200 microns or less to provide a dry finished coated food base, wherein said setting sugar comprises 10 to 35 weight% of the dry finished coated food base. The present invention also refers to (12) the snack food item of (11) above wherein the coating is substantially free of a sweetness suppressor. The present invention also refers to (13) the snack food item of (12) above wherein the weight ratio of slurry coating to dusting sugar ranges from about 1:2 to about 2:1. The present invention also refers to (14) the snack food item of (13) above wherein the weight ratio of combined slurry and dusting sugar and dusting sugar ranges from about 2:1 to about 3:1. The present invention also refers to (15) the snack food item of (14) above wherein the food base is a puffed snack piece and wherein the snack food item has a moisture content of 4% or less. The present invention also refers to (16) the snack food item of (15) above wherein the puffed snack piece is a deep fat fried piece fabricated from a corn based cooked cereal dough in the form of a cornucopia. The present invention also refers to (17) the snack food item of (16) above wherein at least a portion of the nut butter is peanut butter. The present invention also refers to (18) the snack food item of (17) above wherein at least a majority portion of the dusting sugar is dextrose. The present invention also refers to (19) the snack food item of (18) above wherein at least a majority portion of the chocolate is palm based compound coating. The present invention also refers to (20) the snack food product of (19) above wherein the slurry coating additionally comprises about 1% to 10% of a liquid vegetable oil. The present invention also refers to (21) the snack food product of (20) above wherein the slurry coating additionally comprises about 1%-20% of palm kernel oil or palm oil.

## Claims

1. A method for preparing a coated food product, resistant to rub-off of a powdery or fat based topping, comprising the steps of:
A. Providing a hot low moisture chocolate and creamy natural nut butter coating slurry, said slurry comprising:
30% to 70% of the slurry of a chocolate;
30% to 70% of the slurry of a creamy nut butter;
said coating in the form of a liquid having a temperature of 32-44°C and a moisture content of 1-5%;
B. applying the hot coating slurry to a food base to provide a hot liquid coating coated food base in a weight ratio of coating to food base ranging from 1:10 to 1:1; wherein step B includes the sub-steps of:
B1 transferring the food base pieces to a rotating drum or enrober,
B2 tumbling said pieces within said drum, and,
B3 spraying the hot emulsion slurry composition from a plurality of nozzles; and
C. applying a dry particulate setting sugar having a particle size of 1200 microns or less to a quantity of liquid hot slurry coated food base pieces to provide a finished dry stabilized non-sticky powdered coated food base, wherein said setting sugar comprises 10 to 35 weight % of the dry finished coated food base wherein the setting step is performed within the same rotating drum or enrober.

2. The method of claim 1 wherein in step C is practiced comprising a first sub-step of:
C1 applying said dry particulate setting sugar to a quantity of liquid hot slurry coated food base pieces to form a coated food base having a setting sugar basecoat; and thereafter,
C2 applying a seasoning blend in dry powder form over the setting sugar basecoat to form a seasoning blend topcoat to provide a finished dry stabilized non-sticky powdered coated food base.

3. The method of claim 1 wherein the coating slurry additionally comprises 1% to 30% palm kernel oil or palm oil.

4. The method of claim 1 wherein the coating slurry additionally comprises 1% to 10% of a non hydrogenated vegetable oil.

5. The method of claim 4 wherein the ratio of chocolate to nut butter ranges from 1:3 to 3:1.

6. The method of claim 5 wherein at least a portion of the chocolate is compound fat.

7. A chocolate and nut butter snack food item, comprising:
a food base having an exterior surface;
a nut butter and chocolate slurry coating disposed upon at least a portion of the exterior surface of the food base in the form of a thin continuous uniform film of coating, comprising:
30% to 70% of the slurry coating of chocolate;
30% to 70 % of the slurry coating of a creamy natural nut butter not including a hydrogenated fat constituent said slurry coating having a moisture content of 1-5%; and,
a topically applied setting sugar having a particle size of 1200 microns or less to provide a dry finished coated food base,
wherein said setting sugar comprises 10 to 35 weight % of the dry finished coated food base.

8. The snack food item of claim 7 wherein the weight ratio of slurry coating to dusting sugar ranges from 1:2 to 2:1.

9. The snack food item of claim 8 wherein the weight ratio of combined slurry and dusting sugar and dusting sugar ranges from 2:1 to 3:1.

10. The snack food item of claim 9 wherein the food base is a puffed snack piece and wherein the snack food item has a moisture content of 4% or less.

11. The snack food item of claim 10 wherein the puffed snack piece is a deep fat fried piece fabricated from a corn based cooked cereal dough in the form of a cornucopia.

## Patentansprüche

1. Ein Verfahren zur Herstellung eines beschichteten Nahrungsmittelprodukts, beständig gegen das Abreiben eines pulvrigen oder fettbasierten Toppings, umfassend die Schritte:
A. Bereitstellen einer heißen Schokolade mit niedrigem Feuchtigkeitsgehalt und cremiger natürlicher Nussbutterbeschichtungsaufschlämmung, wobei die Aufschlämmung umfasst:
in 30% bis 70% der Aufschlämmung eine Schokolade;
in 30% bis 70% der Aufschlämmung eine cremige Nussbutter;
wobei die Beschichtung in Form einer Flüssigkeit eine Temperatur von 32-44°C und einem Feuchtigkeitsgehalt von 1-5% aufweist;
B. Aufbringen der heißen Beschichtungsaufschlämmung auf eine Nahrungsmittelbasis, um eine mit einer heißen, flüssigen Beschichtung beschichtete Nahrungsmittelbasis in einem Gewichtsverhältnis von Beschichtung zu Nahrungsmittelbasis von 1:10 bis 1:1 bereitzustellen; wobei Schritt B die Unterschritte einschließt:
B1 Überführen der Nahrungsmittelbasisteile in eine rotierende Trommel oder Überziehmaschine,
B2 Trommeln der Teile innerhalb der Trommel und
B3 Sprühen der heißen Emulsionsaufschlämmungszusammensetzung aus einer Mehrzahl von Düsen; und
C. Aufbringen eines trockenen, teilchenförmigen abbindenden Zuckers (setting sugar) mit einer Teilchengröße von 1200 Mikron oder weniger auf eine Menge von mit flüssiger, heißer Aufschlämmung beschichteten Nahrungsmittelbasisteilen, um eine fertige, trocken stabilisierte, nicht klebrige, pulverisierte, beschichtete Nahrungsmittelbasis bereitzustellen, wobei der abbindende Zucker 10 bis 35 Gew.-% der trockenen, fertigen, beschichteten Nahrungsmittelbasis ausmacht, wobei der Abbindeschritt innerhalb derselben rotierenden Trommel oder Überziehmaschine durchgeführt wird.

2. Das Verfahren nach Anspruch 1, wobei Schritt C durchgeführt wird, umfassend einen ersten Unterschritt:
Cl Aufbringen des trockenen, teilchenförmigen abbindenden Zuckers auf eine Menge von mit flüssiger, heißer Aufschlämmung beschichteten Nahrungsmittelbasisteilen, um eine beschichtete Nahrungsmittelbasis mit einer Grundschicht aus abbindendem Zucker zu bilden; und anschließend,
C2 Aufbringen einer Würzmischung in Trockenpulverform über die Grundschicht aus abbindendem Zucker, um eine Würzmischungsdeckschicht zu bilden, um eine fertige, trockene, stabilisierte, nicht klebrige, pulverisierte, beschichtete Nahrungsmittelbasis bereitzustellen.

3. Das Verfahren nach Anspruch 1, wobei die Beschichtungsaufschlämmung zusätzlich 1% bis 30% Palmkernöl oder Palmöl enthält.

4. Das Verfahren nach Anspruch 1, wobei die Beschichtungsaufschlämmung zusätzlich 1% bis 10% eines nicht-hydrierten Pflanzenöls umfasst.

5. Das Verfahren nach Anspruch 4, wobei das Verhältnis von Schokolade zu Nussbutter im Bereich von 1:3 bis 3:1 liegt.

6. Das Verfahren nach Anspruch 5, wobei mindestens ein Teil der Schokolade Mischfett ist.

7. Ein Schokolade- und Nussbutter-Snacknahrungsmittelartikel, umfassend:
eine Nahrungsmittelbasis mit einer äußeren Oberfläche;
eine Aufschlämmungsbeschichtung aus Nussbutter und Schokolade, die auf mindestens einem Teil der äußeren Oberfläche der Nahrungsmittelbasis in Form eines dünnen kontinuierlichen gleichmäßigen Beschichtungsfilms angeordnet ist,
umfassend:
30% bis 70% der Aufschlämmungsbeschichtung Schokolade;
30% bis 70% der Aufschlämmungsbeschichtung eine cremige natürliche Nussbutter ohne hydrierten Fettbestandteil, wobei die Aufschlämmungsbeschichtung einen Feuchtigkeitsgehalt von 1-5% aufweist; und ein topisch aufgetragener abbindender Zucker mit einer Partikelgröße von 1200 Mikron oder weniger, um eine trockene fertige beschichtete Lebensmittelbasis bereitzustellen,
wobei der abbindende Zucker 10 bis 35 Gew.-% der trockenen fertigen beschichteten Nahrungsmittelbasis ausmacht.

8. Der Snacknahrungsmittelartikel nach Anspruch 7, wobei das Gewichtsverhältnis von Aufschlämmungsbeschichtung zu Puderzucker im Bereich von 1:2 bis 2:1 liegt.

9. Der Snacknahrungsmittelartikel nach Anspruch 8, wobei das Gewichtsverhältnis von kombinierter Aufschlämmung und Puderzucker und Puderzucker im Bereich von 2:1 bis 3:1 liegt.

10. Der Snacknahrungsmittelartikel nach Anspruch 9, wobei die Nahrungsmittelbasis ein gepufftes Snackteil ist, und wobei der Snacknahrungsmittelartikel einen Feuchtigkeitsgehalt von 4% oder weniger aufweist.

11. Der Snacknahrungsmittelartikel nach Anspruch 10, wobei das gepuffte Snackteil ein fett-frittiertes Teil ist, das aus einem gekochten Getreide-Teig auf Maisbasis in Form eines Füllhorns hergestellt ist.

## Revendications

1. Méthode pour préparer un produit alimentaire enrobé, résistant au frottement d'un nappage à base de graisse ou en poudre, comprenant les étapes:
A. obtention d'une bouillie chaude d'enrobage au beurre d'arachide naturel crémeux et de chocolat à faible teneur en humidité, ladite bouillie comprenant :
un chocolat à raison de 30 % à 70 % de la bouillie ;
un beurre d'arachide crémeux à raison de 30 % à 70 % de la bouillie ;
ledit enrobage sous forme liquide ayant une température de 32 à 44°C et une teneur en humidité de 1 à 5 % ;
B. application de la bouillie d'enrobage chaude à un aliment de base pour former un aliment de base enrobé d'un enrobage liquide chaud en un rapport en poids de l'enrobage à l'aliment de base situé dans la plage allant de 1/10 à 1/1 ; laquelle étape B comprend les sous―étapes:
B1 transfert des morceaux d'aliment de base dans une enrobeuse ou un tambour rotatif,
B2 tonnelage desdits morceaux dans ledit tambour, et
B3 pulvérisation de la composition de bouillie en émulsion chaude à partir d'une pluralité de buses ; et
C. application d'un sucre à confiture particulaire sec ayant une granulométrie de 1200 micromètres ou moins à une certaine quantité de morceaux d'aliment de base enrobés de bouillie chaude liquide pour fournir un aliment de base enrobé pulvérulent non collant stabilisé sec fini, dans laquelle ledit sucre à confiture représente 10 à 35 % en poids de l'aliment de base enrobé sec fini, dans laquelle l'étape de durcissement est effectuée dans le même tambour rotatif ou enrobeuse.

2. Méthode selon la revendication 1, dans laquelle, dans l'étape C, il est effectué la première sous―étape:
C1 application dudit sucre à confiture particulaire sec à une certaine quantité de morceaux d'aliment de base enrobés de bouillie chaude liquide pour former un aliment de base enrobé ayant un enrobage de base en sucre à confiture ; et ensuite
C2 application d'un mélange d'assaisonnement sous forme de poudre sèche au― dessus de l'enrobage de base en sucre à confiture pour former un enrobage de finition en mélange d'assaisonnement pour que soit obtenu un aliment de base enrobé pulvérulent non collant stabilisé sec fini.

3. Méthode selon la revendication 1, dans laquelle la bouillie d'enrobage comprend de plus 1 % à 30 % d'huile de palmiste ou d'huile de palme.

4. Méthode selon la revendication 1, dans laquelle la bouillie d'enrobage comprend de plus 1 % à 10 % d'une huile végétale non hydrogénée.

5. Méthode selon la revendication 4, dans laquelle le rapport du chocolat au beurre d'arachide est situé dans la plage allant de 1/3 à 3/1.

6. Méthode selon la revendication 5, dans laquelle au moins une partie du chocolat est une graisse composée.

7. Collation à base de chocolat et de beurre d'arachide, comprenant :
un aliment de base ayant une surface extérieure ;
un enrobage en bouillie de beurre d'arachide et de chocolat disposé au―dessus d'au moins une partie de la surface extérieure de l'aliment de base sous la forme d'un film d'enrobage uniforme continu mince, comprenant :
du chocolat à raison de 30 % à 70 % de l'enrobage en bouillie ;
un beurre d'arachide naturel crémeux, ne comprenant pas un constituant gras hydrogéné, à raison de 30 à 70 % de l'enrobage en bouillie, ledit enrobage en bouillie ayant une teneur en humidité de 1 à 5 % ; et
un sucre à confiture appliqué topiquement, ayant une granulométrie de 1200 micromètres ou moins, pour fournir un aliment de base enrobé sec fini, dans lequel ledit sucre à confiture représente 10 à 35 % en poids de l'aliment de base enrobé sec fini.

8. Collation selon la revendication 7, dans laquelle le rapport en poids de l'enrobage en bouillie au sucre à saupoudrer est situé dans la plage allant de 1/2 à 2/1.

9. Collation selon la revendication 8, dans laquelle le rapport en poids de la combinaison de la bouillie et du sucre à saupoudrer au sucre à saupoudrer est situé dans la plage allant de 2/1 à 3/1.

10. Collation selon la revendication 9, dans laquelle l'aliment de base est un morceau de collation soufflé, laquelle collation a une teneur en humidité de 4 % ou moins.

11. Collation selon la revendication 10, dans laquelle le morceau de collation soufflé est un morceau frit en friture fabriqué à partir d'une pâte de céréale cuite à base de maïs sous la forme d'une corne d'abondance.
